# EUROPEAN PATENT SPECIFICATION

(11) **EP 2 727 454 B1**
(45) Date of publication and mention of the grant of the patent: **31.05.2017**
(21) Application number: 13191542.3
(22) Date of filing: 05.11.2013
(51) Int. Cl.: A01D 87/02, A01D 89/00, A01F 15/08, A01F 15/10, A01D 84/00

(54) **Agricultural machine**
Landwirtschaftliche Maschine
Machine agricole

(30) Priority: 06.11.2012 IT BO20120604
(43) Date of publication of application: 07.05.2014
(73) Proprietor: Kverneland Group Ravenna S.r.l., 48026 Russi (RA) (IT)
(72) Inventor: Ravaglia, Paolo, 48012 Bagnacavallo (RA) (IT)
(74) Representative: Modiano, Micaela Nadia

(56) References cited:
- EP-A1- 0 715 804
- DE-A1-102011 010 663
- FR-A1- 2 742 305
- US-A- 5 404 702
- US-A- 5 822 967

## Description

The present invention relates to an agricultural machine for treating previously-cut agricultural products, such as grass, wheat, maize, hay, forage and the like, which are distributed randomly over an area such as a field, a piece of agricultural land and the like. Nowadays, and especially in agricultural areas of northern Europe, for feeding animals it is very common to use silage, i.e. the product of a technique of conservation of grass and forage in general (called ensilage), which involves acidification of the vegetable mass by anaerobic microorganisms which are normally present in the fields.

Thus in order to enable the action of the microorganisms, the grass is baled one day after cutting and is subsequently wrapped with a variable number (typically, between four and six) of layers of polymeric film (polyethylene), in order to ensure the anaerobic fermentation.

The reason why such technique is widely used in colder countries, as mentioned above, is due to the fact that in very rainy climates it is difficult to avail of the three days of sunshine necessary for good haymaking; it must also be noted that the use of ensilage is spreading rapidly in more temperate regions as well, especially in those months (March, April, October) when the climatic conditions are not amenable to the use of other techniques.

It thus appears evident that the implementation of the method described above involves first of all a preliminary step of cutting the grass, after which a side-delivery rake is used, which is an agricultural machine provided with teeth that rotate and brush against the ground, in order to move the cut grass transversely to the advancement direction, collecting it and piling it thus along tidy rows, called windrows.

A baling machine can thus travel the path defined by the windrows, collecting the grass and producing the bale (typically cylindrical), which is subsequently transferred to an additional device that is designed to wrap it and then leave it on the field, to await the acidification process performed by the microorganisms enclosed inside.

Such an implementation solution is not however devoid of drawbacks.

The necessity of executing a plurality of separate operations in sequence, for each one of which the operation of a respective agricultural machine is required, understandably leads to a considerable logistical complexity (owing to the coordination of the various activities), a considerable cost (both due to the number of machines and operators involved, and due to the consumption of fuel required) and in general an excessively long overall working time.

Furthermore, it should be noted that ensilage is typically carried out by third party companies, which are equipped with the various necessary machines described above, which may be transported over several dozens of kilometers (along urban and suburban roads) in order to reach the fields where their operation is required.

Thus the need to move a plurality of separate machines over long distances further increases the costs and the logistical difficulties, with evident inconveniences and increases in associated costs, as well as air pollution, owing to the heavy consumption of fuel.

In addition the entrainment of the cut grass on the ground, which is done by the teeth of the side-delivery rake and is necessary to the formation of the windrows, leads to a sort of "maltreatment" thereof, and the loss of part thereof along the ground, and inevitably causes the simultaneous shifting of soil and other impurities, which is thus mixed in with the silage, leading to a decrease in its quality.

Finally, it should be noted that if the mass of grass is distributed on the ground appreciably unevenly (as moreover frequently occurs), then during the advancement of the side-delivery rake the risk is high that conical, instead of cylindrical, bales will be formed, owing to the greater quantity of grass gathered and accumulated on one side of the windrow than on the other. This requires producers to provide the machines with sensors capable of detecting such uneven distributions, and of sending the signal to the drive/to the operator, forcing them to make continual (and inconvenient) transverse deviations of the path of advancement with respect to an ideal direction (moreover, such deviations are often complex to execute owing to the mass and inertia of the machine itself).

EP 0715804 A1 discloses a machine for processing crop lying on the soil, comprising an appended machine, such as a bale press, including at least one pick-up member which extends sidewardly and is pivotable about a shaft that is orientated in the direction of travel for picking up crop and subsequently displacing same transversely to the direction of travel.

US 5822967 A discloses an apparatus for forming and wrapping round bales which includes a baler, arm structure, a cradle, and a moving structure. The baler is for taking in a crop material, forming the crop material into a bale, and ejecting the bale. The arm structure is connected to the baler. The cradle is pivotably supported by the arm structure and is for holding the ejected bale. The cradle includes rotating structure for rotating the bale about a central axis of the bale. Moving structure is for providing relative movement between the baler and the cradle. Wrapping structure is supported by the baler and is adapted for holding wrapping material. The wrapping structure is movable around the bale and cooperates with the rotating structure to be capable of wrapping the bale with the wrapping material.

The aim of the present invention is to solve the above-mentioned problems, by providing an agricultural machine that makes it possible to simplify the activities of producing silage.

Within this aim, an object of the invention is to provide an agricultural machine that reduces the costs associated with the activities of producing silage.

A further object of the invention is to provide an agricultural machine that ensures a reduction in silage production time.

Another object of the invention is to provide an agricultural machine that ensures a high reliability of operation and a reduced environmental impact.

Another object of the invention is to provide an agricultural machine that enables the production of high quality silage, free from soil and other impurities and without maltreatment or deterioration of the cut grass used.

Another object of the invention is to provide an agricultural machine that ensures a correct formation of the bale, even if the grass, or other agricultural product, is distributed on the ground in an uneven manner.

Another object of the invention is to provide an agricultural machine that can easily travel on urban and suburban roads.

Another object of the invention is to provide an agricultural machine that is safely applied.

This aim and these and other objects which will become more evident hereinafter are achieved by an agricultural machine for treating previously-cut agricultural products, such as grass, wheat, maize, hay, forage and the like, which are distributed randomly over an area such as a field, a piece of agricultural land and the like, comprising the features of claim 1.

Further characteristics and advantages of the invention will become more apparent from the description of a preferred, but not exclusive, embodiment of the agricultural machine according to the invention, which is illustrated by way of non-limiting example in the accompanying drawings wherein:
Figure 1 is a three-quarters perspective front view, seen from above, schematically illustrating the agricultural machine according to the invention;

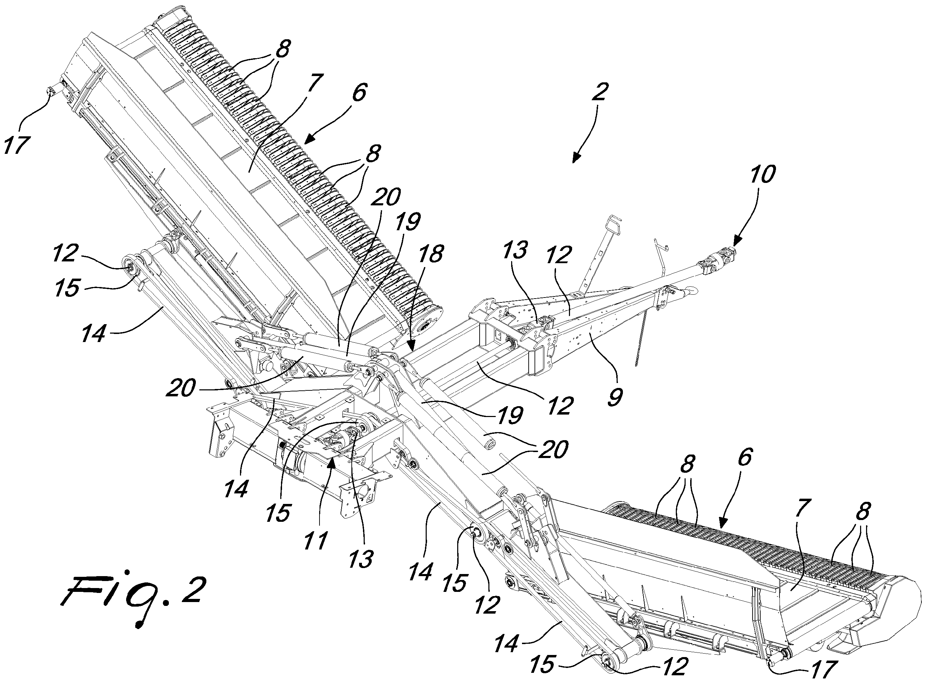

Figure 2 is a three-quarters perspective rear view, seen from above, illustrating the transfer apparatus;

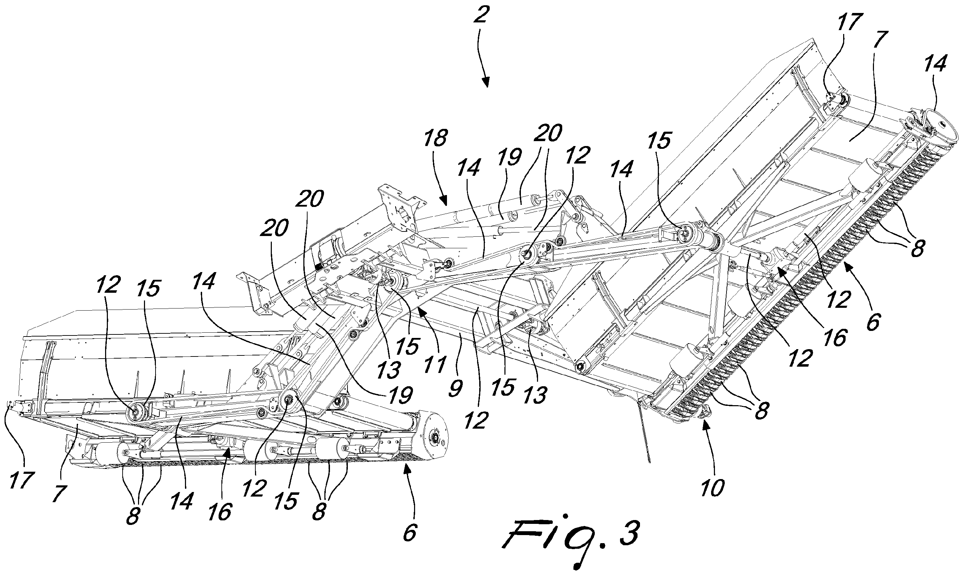

Figure 3 is a three-quarters perspective rear view, seen from below, illustrating the transfer apparatus;

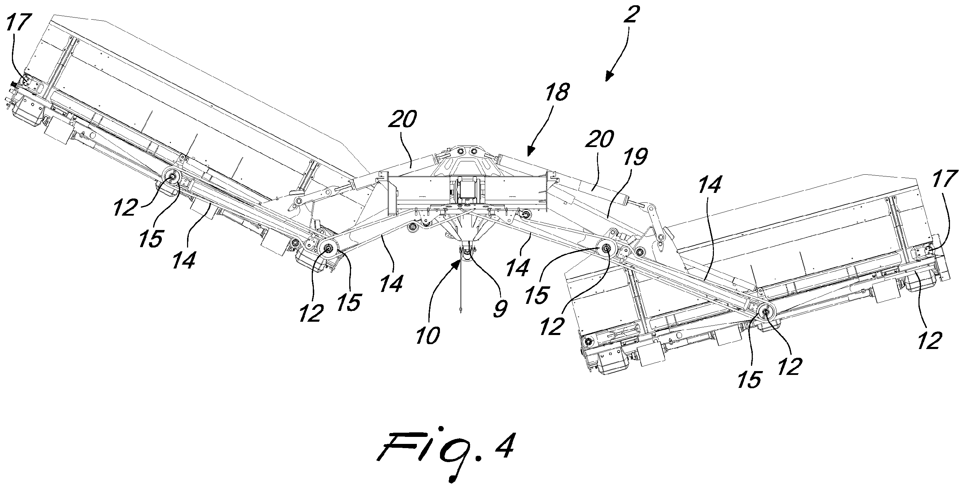

Figure 4 is a rear view of the transfer apparatus;
Figure 5 is a view from above of the transfer apparatus.

With particular reference to the figures, the reference numeral 1 generally designates an agricultural machine that is capable of processing (in accordance with the methods that will be described on the following pages) previously-cut agricultural products, of the type of grass, wheat, maize, hay, forage, and the like, and which, following a preliminary cutting operation, are distributed randomly over an area of the type of a field, a piece of agricultural land and the like.

More precisely, in the preferred application the agricultural machine 1 is intended to process grass that has previously been cut (typically, one day earlier), in areas like those mentioned above, in colder countries or in any case in countries that are subject to temperate climate conditions, thus offering a method of management and reuse of said grass which is an alternative to traditional haymaking (which cannot be done in such climates, owing to the lack of the necessary extended periods of sunshine).

According to the invention, the agricultural machine 1 comprises first of all an apparatus 2 for transferring the previously-cut agricultural products, so as to achieve the tidy accumulation thereof (during the advancement of said transfer apparatus 2 and of said machine 1), in a predefined region that is substantially arranged along the advancement direction A of the transfer apparatus 2, thus performing the activity known as "side-raking".

The agricultural machine 1 furthermore comprises a unit 3 for baling the agricultural products, which is arranged substantially downstream of the transfer apparatus 2 and is provided with at least one gathering unit 4 thereof: such gathering unit 4 faces and is proximate to the above-mentioned predefined region, so as to be capable of retrieving said agricultural products that were previously cut and accumulated in the region, and, consequently, to be capable of forming a bale (preferably, but not exclusively, cylindrical).

It should be noted that the methods of formation of the bale can be any type, conventional or otherwise, and therefore in the present discussion only minimal implementation details shall be provided regarding such methods.

Furthermore, the agricultural machine 1 comprises a device 5 for wrapping the bale with a film, which faces and is proximate to the baling unit 3, so as to obtain the substantially hermetic wrapping of the bale itself, as a consequence isolating it from the outside.

So in fact, the transfer apparatus 2, the baling unit 3 and the wrapping device 5 work together to achieve the ensilage of the previously-cut grass (or other agricultural product), in order to be able to thus exploit, as is known, the action of anaerobic microorganisms (contained in the wrapped bale) to cause chemical transformations in the grass and subsequently use it for animal feed.

In particular, according to the invention, the transfer apparatus 2 comprises means 6 for the lifting and delivery of the previously-cut agricultural products to two conveyor belts 7 (of the type with a mat for example), which are arranged, in at least one operating configuration, substantially horizontally (thus parallel to the ground) and transversely with respect to the advancement direction A: such belt 7 can thus feed the predefined region mentioned previously, which is located along the advancement direction A, in order to be able to transfer the previously-cut agricultural products thereto and accumulate them thereat.

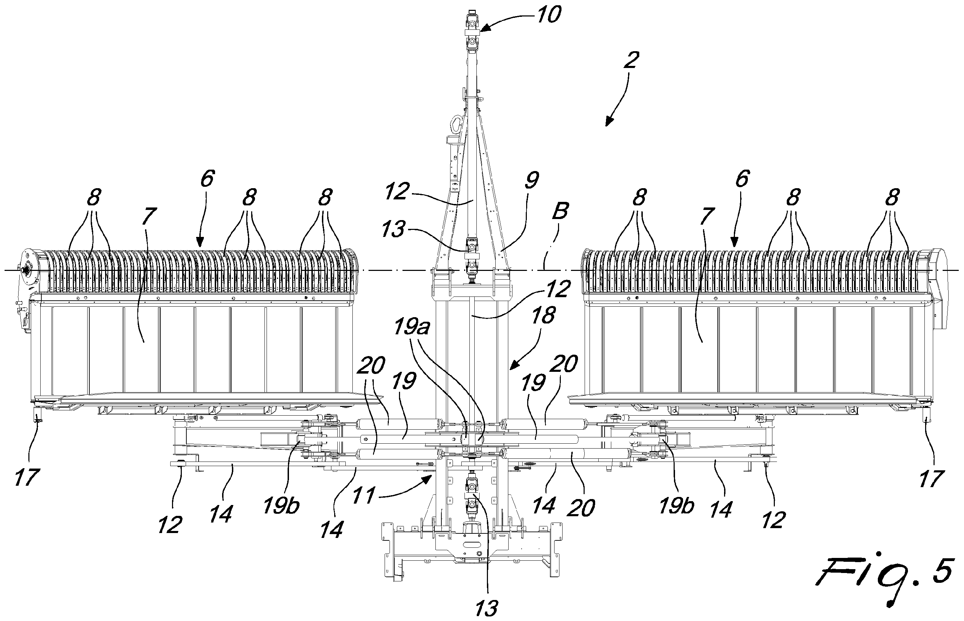

Even more specifically, the lifting and delivery means 6 comprise at least one row of mutually aligned teeth which rotates (at least in the operating configuration) about a first rotation axis B (indicated schematically in Figure 5), parallel to the belt 7; during their rotation the teeth can thus gather the previously-cut agricultural products, lift them and deliver them to the belt 7, which faces and is proximate to the row of teeth.

For example, in the embodiment shown in the accompanying figures, the teeth (not shown for the sake of simplicity) can move in respective gaps that are defined between a plurality of spacers 8 (or plates, or straps) that are attached to the front of the belt 7 and aligned along the first rotation axis B.

With reference to the preferred, but not exclusive, embodiment, the agricultural machine 1 comprises a tractor (of the conventional type for example), which is provided with a power unit, and a trailer chassis 9, which can be coupled to the tractor and towed by the latter (thanks to respective wheels 9a that make it possible for the agricultural machine 1 to be moved along the advancement direction A determined by the tractor): an operator (located in the driving cabin of the tractor) can thus tow the chassis 9 along the selected area, after the grass has been cut, in order to achieve the ensilage thereof, thanks to the transfer apparatus 2, to the baling unit 3, and to the wrapping device 5 which are all supported by the trailer chassis 9.

Conveniently, in order to allow the operation of gathering the previously-cut agricultural products from the ground, lifting them and delivering them to the belt 7, elements 11 for the mechanical transmission of the power dispensed by the power unit to the row of teeth are interposed between a power take-off 10 connected to the power unit of the tractor and the transfer apparatus 2, in order to drive their rotation about the first rotation axis B, thus avoiding the need for complex hydraulic transmissions, which are often adopted in the industrial sector to which the invention belongs.

More specifically, with further reference to the preferred, but not exclusive, embodiment, the mechanical transmission elements 11 comprise a plurality of intermediate transmission shafts 12, which are interposed between the power take-off 10 and at least one supporting rod for the row of teeth, so as to obtain the desired mechanical transmission of the power dispensed by the power unit to the lifting and delivery means 6.

In order to enable the transmission, and as a function of the specific configurations and arrangements of the various intermediate shafts 12, the latter are mutually connected by respective joints 13 and/or traction chains 14, which are wound around respective pulleys 15 that are supported by the intermediate shafts 12 and/or bevel gears 16.

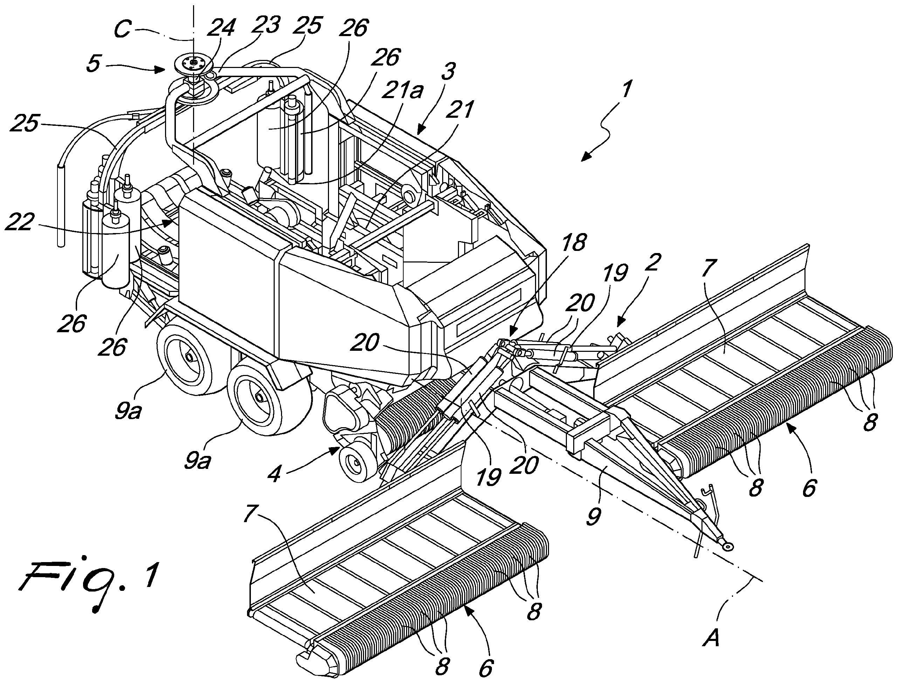

According to the embodiment shown in the accompanying figures for the purposes of non-limiting example of application of the invention, the transfer apparatus 2 comprises two conveyor belts 7, which are arranged on opposite sides with respect to the advancement direction A and, at least in the operating configuration (in which they are shown in Figure 1), they are substantially horizontal (parallel to the ground) and perpendicular to the advancement direction A.
Each belt 7 thus faces and is proximate to a plurality (five, for example) rows of teeth, which rotate about a same respective first rotation axis B, which is parallel to the corresponding belt 7, and each row of teeth is supported by a respective rod, which is associated with the power unit by the mechanical transmission elements 11.

Positively, the transfer apparatus 2 comprises a pair of mutually independent motors 17 for driving and actuating the belts 7. Each one of such motors 17 is selected to be of the type of hydraulic motors and is associated with a respective hydraulic circuit (be it of the tractor or of the agricultural machine 1 according to the invention), leading to a corresponding belt 7.

Furthermore, each motor 17 is controlled by a control and management unit, which is provided with sensors for detecting, instant by instant, the shape assumed by the bale being formed.

Thus by having such information constantly available, and thanks to the adoption of two mutually independent hydraulic motors, the control and management unit can independently adjust the transfer speed at which each belt 7 operates, modifying it appropriately (and independently of the speed of the other belt) if the sensors detect that the bale is taking on a shape different from the preset one, as a consequence compensating for any uneven distributions of the previously-cut agricultural products on the ground and preventing the formation of similarly uneven accumulations in the predefined region.

More precisely, as previously noted the baling unit 3 is adapted to form a cylindrical bale: as a result of an uneven distribution on the ground, as soon as the bale begins to take on a conical shape, the sensors (associated with the unit 3) are capable of detecting this immediately so as to be able to command the variation of speed of at least one of the belts 7 (independently of the speed of the other belt). By modifying the speed, it is possible to vary the range and more generally the path taken by the agricultural products released by the belt 7 in the predefined region (for example preventing them from falling directly beside the belt 7, and promoting their ejection farther away), so as to ensure a uniformly distributed accumulation over the entire width of said predefined region.

Conveniently, the agricultural machine 1 comprises means 18 for moving each belt 7 and the rods for supporting the teeth in a mutually independent manner, in order to cause the rotation of each one of them from the operating configuration, in which, as has been shown, they are arranged horizontally in order to allow the lifting and delivery means 6 to retrieve the previously-cut agricultural products from the ground, to a second, inactive configuration, and vice versa.

In the inactive configuration the belts 7 and the supporting rods are arranged substantially vertically and proximate to the advancement direction A (and thus to the baling unit 3 and to the wrapping device 5), in order to contain the transverse space occupation of the agricultural machine 1, thus enabling its circulation on urban and suburban roads.

In particular, such movement means 18 comprise at least one pair of hydraulic jacks 19: each jack 19 is articulated, at a first end 19a thereof, to the chassis 9, and is coupled, at a second, sliding end 19b thereof, to a respective belt 7.

It should be noted that the movement means 18 can also comprise relief springs 20, which are also interposed between the chassis 9 and the respective belts 7, in order to reduce the stresses imposed on the machine 1 and on its components: for example, in the embodiment shown in the accompanying figures by way of non-limiting example, each jack 19 has a respective spring 20 facing each side thereof.

Positively, the baling unit 3 comprises a chamber 21 for forming the bale (which can be implemented according to substantially conventional methods), which is provided with an inlet for the previously-cut agricultural products, which is directed toward the transfer apparatus 2, and an outlet 21 a for the bale, which is closed by a respective door and faces the wrapping device 5.

Interposed between the chamber 21 and the previously mentioned gathering unit 4, which is designed to lift the agricultural products accumulated along the predefined region and which can also be conventional (and which for example can comprise a shaft that rotates in parallel to and proximately to the ground, directly driven by the power unit by means of the power take-off 10 and the transmission elements 11), there is advantageously at least one screw feeder (or a pair of mutually opposite screw feeders) for transporting the agricultural products toward the inlet, and a plurality of blades, which shred the previously-cut agricultural products, thus guarding against the danger that excessively long stalks of grass could enter the chamber 21, compromising the optimal process of formation of the bale.

On the opposite side, following the completion of the bale formation process, the door can be automatically actuated in order to connect the interior of the chamber 21 with the exterior, in order to allow the automatic expulsion of said bale and the delivery thereof to the wrapping device 5.

According to the preferred, non-exclusive embodiment, the wrapping device 5 comprises a resting base 22 (parallel to the ground), which is defined by the chassis 9 (at the rear of the chamber 21) and equipped with respective rollers (and/or belts), the operation of which will be made clearer below. The base 22 is surmounted by a frame 23, which comprises a pivot 24 that can rotate about a second rotation axis C, perpendicular to the base 22 (and to the ground), and which supports at least two mutually opposite arms 25 (which are preferably made of aluminum alloy, to reduce the weight and thus the stresses of the mechanical components affected, during starting and stopping, and to enable a more immediate emergency stop, in the event of accidental contact with the operator).

During the rotation of the arms 25 about the second axis C, respective flaps of the previously mentioned film unwind from at least two rolls 26 that are supported by said arms 25, in order to wrap the bale, while the bale can roll on the rollers (in order to ensure optimum wrapping and complete insulation from the outside).

In order to contribute to a correct wrapping (and thus to an ideal ensilage process), the device 5 is furthermore equipped with adapted tensioner assemblies, which are capable of maintaining the tension of the film at predetermined pre-drawn values, for example comprised between 65% and 70% (thus also reducing the consumption of film).

The operation of the agricultural machine according to the invention is as follows.

Thanks to the agricultural machine 1, it is possible as has been shown to process grass or other previously-cut agricultural products which have been left distributed randomly along any area of the type of a field, a piece of agricultural land, and the like.

In fact, the tractor can tow the trailer chassis 9 along the area, thus achieving (substantially simultaneously) all the production activities that are necessary to obtain silage.

More precisely, while the tractor moves in the selected advancement direction A, the teeth can lift the grass from the ground and deliver it to the rearward belts 7, which are provided with motion which is transverse to the advancement direction A, and which thus eject the grass in the predefined region, which in fact is located at the center, along the advancement direction A.

All of the grass that was originally distributed over a portion of the selected area which is substantially as wide as the belts 7 is thus accumulated and gathered by the baling unit 3, which is arranged directly downstream of the transfer apparatus 2: in this manner, with the progressive advancement of the tractor along the selected area, the agricultural machine 1 collects the grass and forms a bale with it.

Once the formation of the bale is completed, the door, which is normally deployed to close the outlet 21 a, is automatically actuated, so as to perform the discharge (rearward with respect to the chamber 21) of the bale, which is arranged on the resting base 22 and kept there by adapted retention means, which still allow the bale to rotate on rollers that are adapted for such purpose.

Thus, while the bale rotates in place (and while the tractor can continue advancing, in order to collect new cut grass and form another bale in the chamber 21), the wrapping device 5 can be actuated.

The pivot 24 and with it the arms 25 (around the bale) are thus rotated (at a speed for example of 35 rpm), in order to thus completely wrap the bale in a desired number (preferably, but not exclusively, comprised between 4 and 6) of layers of film (made for example of polyethylene or other polymeric material), provided by two or more rolls 26 which are carried by said arms 25.

The completely wrapped bale can thus be released onto the ground, and in order to facilitate such activity, it should be noted that the resting base 22 can be made oscillating and/or be enabled to be raised and lowered, depending on the specific requirements.

It thus appears evident that the activities of side-raking (i.e. the movement of the cut grass), formation of the bale, and subsequent winding thereof, can be effectively and easily performed by the agricultural machine 1 alone, thus greatly simplifying the activities of producing silage and as a consequence reducing the associated costs (thanks to the reduction of the number of apparatuses involved, of consumption of fuel and of energy in general, of the tying material, of the man-hours required, etc.).

Furthermore, by achieving the substantial simultaneity of the steps described above, and eliminating the dead times that are inevitably entailed by the use of separate conventional apparatuses, the times necessary to conduct the ensilage process are also greatly reduced.

The reduction in consumption of fuel evidently concerns not only the activities performed in the selected area (thanks to the use of a single agricultural machine 1), but also the transfers from the storage location of the agricultural machine 1 to said area: therefore the economic saving and the reduction of the environmental impact are undoubtedly considerable.

Advantageously, the movement of the cut grass transversely to the advancement direction A is performed by belts 7 that transfer grass that is simply lifted from the ground, without the necessity of resorting to rakes or similar elements that are moved by sliding directly over the ground, and guards against the danger of blockages (for example owing to excessive accumulations of grass in localized portions of the side-delivery rake) and against the danger of deterioration or maltreatment of the cut grass (and of the ground).

Moreover, thanks to the choice of using teeth that are designed to lift the agricultural products, it is possible to ensure a form of filtration thereof, by freeing it of the soil which falls to the ground without being mixed with the grass, as occasionally occurs with conventional ensilage methods, in which the soil itself is enclosed in the wrapped bale, impairing its quality (since toxins can develop which are harmful to the animal that is intended to be fed with the silage).

It must furthermore not be forgotten that the entrainment on the ground of conventional side-delivery rakes also leads to damage and/or loss of the foliar apparatus of the agricultural products (with consequent additional loss of quality of the silage), thus requiring the laborers to perform the operations of side-raking/formation of windrows at the least hot and more humid times of the day (late evening and early morning). Such limitation is also overcome by using the agricultural machine 1 according to the invention, in that lifting the grass does not cause any damage or loss, leaving the utmost freedom of choice of the time in which to work.

It should furthermore be emphasized that the use of elements 11 for the mechanical transmission of the power dispensed by the power unit (arranged on the tractor) makes it possible to avoid the adoption of further hydraulic or electric elements, as occurs with conventional agricultural apparatuses, thus ensuring greater structural simplicity and a smaller number of components, with evident advantages.

As has been shown, the possibility of moving the belts 7, in order to bring them from the operating configuration, in which they are arranged horizontally, to the inactive configuration, in which they are drawn toward the chamber 21 and arranged substantially vertically, ensures the reduction of the transverse space occupation and thus enables the agricultural machine 1 to easily travel urban and suburban roads (since it is subject to the rules defined by the Highway Code).

In this regard, it should be noted that the belts 7 are of an overall length equal to for example approximately 3.5 meters, thus making it possible to operate, while the tractor advances, on an area of approximately 7-8 meters (this is the transverse space occupation of the agricultural machine 1 when the belts 7 are arranged in the operating configuration). By rotating the belts 7 until they are in the inactive configuration, the transverse space occupation can be reduced down to 2.5 meters (thus equal to the limit specified by the Italian Highway Code) while the height is lower than or equal to 4 meters (the limit specified by the Highway Code).

The rotation of the belts 7 and of the teeth, as with the possibility of any other movements conferred thereupon, furthermore makes it possible to overcome any obstacles that may be present, along the ground and/or the previously-formed windrows, with greater ease.

In addition, since each belt 7 is caused to rotate by a respective jack 19, independently of the jack used to rotate the other belt 7, it is selectively possible to maintain one belt 7 in the operating configuration while the other is arranged in the inactive configuration, in order to facilitate the manoeuvres of the tractor in a field and/or in order to reduce the width of the strip of field or piece of agricultural land affected by the action of the teeth, as desired, depending on the specific requirements.

Finally, it should be emphasized that if the mass of grass is distributed on the ground in an appreciably uneven manner, the control and management unit can vary the sliding speed of at least one of the belts 7, in order to ensure an even distribution of the agricultural products over the predefined region, and thus guarding, in a practical and easy manner (and without imposing transverse deviations of the advancement direction A, which can be kept straight), against the danger of forming conical bales, instead of cylindrical bales, as can occur when using conventional agricultural machines.

In practice it has been found that the agricultural machine according to the invention fully achieves the set aim, in that the adoption of an apparatus for transferring previously-cut agricultural products to a predefined region, a unit for baling the latter, and a device for wrapping the bale all make it possible to provide an agricultural machine that ensures a simplification of the activities of producing silage.

The invention, thus conceived, is susceptible of numerous modifications and variations, all of which are within the scope of the appended claims.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An agricultural machine for treating previously-cut agricultural products, such as grass, wheat, maize, hay, forage and the like, which are distributed randomly over an area such as a field, a piece of agricultural land and the like, comprising:
- an apparatus (2) for transferring the previously-cut agricultural products for their tidy accumulation, during the advancement of said transfer apparatus (2), in a predefined region that is substantially located along an advancement direction (A);
- a unit (3) for baling the agricultural products, which is arranged substantially downstream of said transfer apparatus (2) and is provided with at least one agricultural product gathering unit (4), which faces and is proximate to said predefined region, for the consequent forming of a bale with the previously-cut agricultural products accumulated in said region;
- a device (5), for wrapping the bale with a film, which faces and is proximate to said baling unit (3), for the substantially hermetic wrapping of the bale, with consequent insulation from the outside,
wherein said transfer apparatus (2) comprises means (6) for lifting and delivering the previously-cut agricultural products to two conveyor belts (7), which are arranged on opposite sides with respect to said advancement direction (A) and, in at least one operating configuration, substantially horizontally and at right angles to the advancement direction (A),
each of said belts (7) leading to said predefined region located along the advancement direction (A), for the transfer and accumulation of the previously-cut agricultural products in said region,
the agricultural machine being **characterized in that** said transfer apparatus (2) comprises a pair of mutually independent motors (17) for said belts (7), which are selected preferably to be of the type of hydraulic motors associated with respective hydraulic circuits, each one of said motors (17) being controlled by a control and management unit provided with sensors for detecting, step by step the shape assumed by the bale being formed, for the independent adjustment of the transfer rate of each one of said belts (7) as a consequence of any discrepancies with respect to the predefined shape of the bale and of the consequent need to compensate for uneven distributions of the previously-cut agricultural products over the ground.

2. The agricultural machine according to claim 1, **characterized in that** said lifting and delivery means (6) comprise at least one row of mutually aligned teeth, which rotates, at least in said operating configuration, about a first rotation axis (B) that is parallel to said belt (7), in order to gather the previously-cut agricultural products from the ground, lift them and deliver them to said at least one belt (7), which is arranged so as to face and be proximate to said row of teeth.

3. The agricultural machine according to claim 2, **characterized in that** it comprises a tractor, provided with a power unit, and a trailer chassis (9), which can be hauled by said tractor and supports said transfer apparatus (2), said baling unit (3) and said wrapping device (5), where between a power take-off (10) connected to said power unit of said tractor and said transfer apparatus (2) elements (11) are interposed for mechanical transmission of the power delivered by said power unit to said at least one row of said teeth, for their rotation about said first axis (B).

4. The agricultural machine according to claim 3, **characterized in that** said mechanical transmission elements (11) comprise a plurality of intermediate transmission shafts (12), which are interposed between said power take-off (10) and at least one supporting rod for said at least one row of said teeth, for the mechanical transmission of the power delivered by said power unit to said lifting and delivery means (6), said intermediate shafts (12) being mutually connected by respective joints (13) and/or traction chains (14), which are wound around respective pulleys (15) that are supported by said intermediate shafts (12) and/or bevel gears (16).

5. The agricultural machine according to claims 1, 2 and 3, **characterized in that** each one of said belts (7) faces and is proximate to a plurality of said rows of said teeth, which rotate about a same respective first rotation axis (B), which is parallel to said corresponding belt (7), each one of said rows of said teeth being supported by a respective rod, which is associated with said power unit by said mechanical transmission elements (11).

6. The agricultural machine according to anyone of claims 4 to 5, **characterized in that** it comprises means (18) for moving each one of said belts (7) and of said supporting rods in a mutually independent manner, for rotation from said operating configuration, in which they are arranged horizontally, to an inactive configuration, in which they are arranged substantially vertically and proximate to the advancement direction (A), so as to contain the transverse space occupation, and vice versa.

7. The agricultural machine according to claim 6, **characterized in that** said movement means (18) comprise at least one pair of hydraulic jacks (19), each one of said jacks (19) being articulated, at a first end (19a) thereof, to said chassis (9) and being coupled, with a second, sliding end (19b) thereof, to a respective belt (7).

8. The agricultural machine according to one or more of the preceding claims, **characterized in that** said baling unit (3) comprises a bale formation chamber (21), which is provided with an inlet for introducing the previously-cut agricultural products which is directed toward said gathering unit (4) and said transfer apparatus (2), and with an outlet (21a) for unloading the bale, which is closed by a respective door and faces said wrapping device (5), where after the completion of the bale formation process said door can be actuated automatically in order to allow its automatic expulsion and its delivery to said wrapping device (5), where between said gathering unit (4), intended to lift the agricultural products accumulated along said predefined region, and said chamber (21) the following are interposed: at least one screw feeder for conveying the agricultural products toward said inlet, and a plurality of blades, for shredding the previously-cut agricultural products.

9. The agricultural machine according to one or more of the preceding claims, **characterized in that** said wrapping device (5) comprises a resting base (22), which is defined by said chassis (9) and is provided with respective rollers, said base (22) being surmounted by a frame (23), comprising a pivot (24) that can rotate about a second rotation axis (C), which is perpendicular to said base (22), and supports at least two mutually opposite arms (25), during the rotation of said arms (25) about said second axis (C) respective flaps of said film unwinding from at least two rolls (26) supported by said arms (25), for wrapping the bale, as it rolls on said rollers.

## Patentansprüche

1. Eine Landmaschine zur Behandlung vorgeschnittener landwirtschaftlicher Produkte wie Gras, Weizen, Mais, Heu, Viehfutter und dergleichen, die nach dem Zufallsprinzip über ein Gebiet wie zum Beispiel ein Feld, eine landwirtschaftliche Fläche und dergleichen verteilt sind, Folgendes umfassend:
- eine Vorrichtung (2) zum Überführen der vorgeschnittenen landwirtschaftlichen Produkte zum Zwecke ihrer ordentlichen Anhäufung, während des Vorschubs der Überführungsvorrichtung (2), in einem vordefinierten Bereich, der sich im Wesentlichen entlang einer Vorschubrichtung (A) befindet;
- eine Einheit (3), um die landwirtschaftlichen Produkte in Ballen zu verpacken, die im Wesentlichen stromabwärts von der Überführungsvorrichtung (2) angeordnet und mit mindestens einer Sammeleinheit (4) für landwirtschaftliche Produkte versehen ist, die dem vordefinierten Bereich zugewandt ist und an ihn angrenzt, zum daraus folgenden Formen eines Ballens aus den vorgeschnittenen landwirtschaftlichen Produkten, die in dem Bereich gesammelt wurden;
- eine Vorrichtung (5) zum Einwickeln des Ballens in einen Film, die der Verpackungseinheit (3) zugewandt ist und an sie angrenzt, zum im Wesentlichen hermetischen Einwickeln des Ballens mit daraus folgender Isolation gegenüber draußen,
wobei die Überführungsvorrichtung (2) Mittel (6) umfasst, um die vorgeschnittenen landwirtschaftlichen Produkte hochzuheben und an zwei Förderbänder (7) zu befördern, die auf gegenüberliegenden Seiten mit Bezug auf die Vorschubrichtung (A) und, in mindestens einer Arbeitskonfiguration, im Wesentlichen horizontal und in rechten Winkeln zur Vorschubrichtung (A) angeordnet sind,
wobei jedes der Bänder (7) zu dem vordefinierten Bereich führt, der sich entlang der Vorschubrichtung (A) befindet, zum Zwecke der Überführung und Anhäufung der vorgeschnittenen landwirtschaftlichen Produkte in dem Bereich,
wobei die Landmaschine **dadurch gekennzeichnet ist, dass** die Überführungsvorrichtung (2) ein Paar voneinander unabhängiger Motoren (17) für die Bänder (7) umfasst, die vorzugsweise aus der Art von Hydraulikmotoren gewählt sind, die mit entsprechenden Hydraulikkreisen verbunden sind, wobei jeder der Motoren (17) von einer Steuer- und Verwaltungseinheit gesteuert wird, die mit Sensoren ausgestattet ist, um Schritt für Schritt die Form zu erfassen, die von dem geformten Ballen angenommen wird, zur unabhängigen Anpassung der Transferrate jedes der Bänder (7) infolge eventueller Diskrepanzen gegenüber der vordefinierten Form des Ballens und der daraus folgenden Notwendigkeit, eine unebene Verteilung der vorgeschnittenen landwirtschaftlichen Produkte auf dem Boden auszugleichen.

2. Die Landmaschine gemäß Anspruch 1, **dadurch gekennzeichnet, dass** die Anhebungs- und Beförderungsmittel (6) mindestens eine Reihe miteinander ausgerichteter Zähne umfassen, die, zumindest in der Arbeitskonfiguration, um eine erste Drehachse (B) rotiert, die parallel zu dem Band (7) ist, um die vorgeschnittenen landwirtschaftlichen Produkte vom Boden zu sammeln, hochzuheben und zu dem mindestens einen Band (7) zu befördern, das so angeordnet ist, dass es der Reihe von Zähnen zugewandt ist und an sie angrenzt.

3. Die Landmaschine gemäß Anspruch 2, **dadurch gekennzeichnet, dass** sie eine Zugmaschine umfasst, ausgestattet mit einem Triebfahrzeug, und einem Anhängerfahrgestell (9), das von der Zugmaschine gezogen werden kann und die Überführungsvorrichtung (2), die Verpackungseinheit (3) und die Einwickelvorrichtung (5) trägt, wobei zwischen einem Abtrieb (10), der mit dem Triebfahrzeug der Zugmaschine verbunden ist, und der Überführungsvorrichtung (2) Elemente (11) zur mechanischen Übertragung der Leistung angeordnet sind, die von dem Triebfahrzeug an die mindestens eine Reihe von Zähnen abgegeben wird, zum Zwecke ihrer Drehung um die erste Achse (B).

4. Die Landmaschine gemäß Anspruch 3, **dadurch gekennzeichnet, dass** die mechanischen Übertragungselemente (11) eine Vielzahl intermediärer Vorgelegewellen (12) umfassen, die zwischen dem Abtrieb (10) und mindestens einer Stützstange für die mindestens eine Reihe von Zähnen angeordnet sind, zur mechanischen Übertragung der von dem Triebfahrzeug abgegebenen Leistung an das Anhebungs- und Beförderungsmittel (6), wobei die intermediären Wellen (12) miteinander durch entsprechende Gelenke (13) und/oder Antriebsstränge (14) verbunden sind, die um entsprechende Riemenscheiben (15) gewickelt sind, welche von dem intermediären Wellen (12) und/oder Kegelrädern (16) getragen werden.

5. Die Landmaschine gemäß den Ansprüchen 1, 2 und 3, **dadurch gekennzeichnet, dass** jedes der Bänder (7) einer Vielzahl der Reihen der Zähne zugewandt ist und an sie angrenzt, die sich um eine selbe entsprechende erste Drehachse (B) drehen, welche parallel zu dem jeweiligen Band (7) ist, wobei jede der Reihen der Zähne von einer entsprechenden Stange getragen wird, die durch die mechanischen Übertragungselemente (11) mit dem Triebfahrzeug verbunden ist.

6. Die Landmaschine gemäß einem beliebigen der Ansprüche 4 bis 5, **dadurch gekennzeichnet, dass** sie Mittel (18) zum Bewegen jedes der Bänder (7) und jeder der Stützstangen unabhängig voneinander umfasst, zum Drehen aus der Arbeitskonfiguration, in welcher sie horizontal angeordnet sind, in eine inaktive Konfiguration, in welcher sie im Wesentlichen vertikal und angrenzend an die Vorschubrichtung (A) angeordnet sind, um den transversalen Platzbedarf zu begrenzen, und umgekehrt.

7. Die Landmaschine gemäß Anspruch 6, **dadurch gekennzeichnet, dass** die Bewegungsmittel (18) mindestens ein Paar hydraulischer Heber (19) umfassen, wobei jeder der Heber (19) an einem ersten Ende (19a) desselben gelenkig mit dem Gestell (9) verbunden und an einem zweiten, gleitenden Ende (19b) desselben mit einem entsprechenden Band (7) gekoppelt ist.

8. Die Landmaschine gemäß einem oder mehreren der obigen Ansprüche, **dadurch gekennzeichnet, dass** die Verpackungseinheit (3) eine Ballenformkammer (21) umfasst, die mit einem Einlass zum Einführen der vorgeschnittenen landwirtschaftlichen Produkte ausgestattet ist, der zu der Sammeleinheit (4) und der Überführungsvorrichtung (2) hin gerichtet ist, und mit einem Auslass (21a) zum Abladen des Ballens, der durch eine entsprechende Tür verschlossen und der Einwickelvorrichtung (5) zugewandt ist, wobei nach Abschluss des Ballenformprozesses die Tür automatisch betätigt werden kann, um sein automatisches Ausstoßen und seine Abgabe an die Einwickelvorrichtung (5) zu ermöglichen, wobei zwischen der Sammeleinheit (4), die dazu dient, die landwirtschaftlichen Produkte, die sich entlang dem vordefinierten Bereich angehäuft haben, hochzuheben, und der Kammer (21) Folgendes angeordnet ist: mindestens ein Schneckenaufgeber zum Befördern der landwirtschaftlichen Produkte zu dem Einlass und eine Vielzahl von Klingen zum Zerkleinern der vorgeschnittenen landwirtschaftlichen Produkte.

9. Die Landmaschine gemäß einem oder mehreren der obigen Ansprüche, **dadurch gekennzeichnet, dass** die Einwickelvorrichtung (5) eine Auflagebasis (22) umfasst, die von dem Gestell (9) bestimmt wird und mit entsprechenden Rollen ausgestattet ist, wobei über der Basis (22) ein Rahmen (23) montiert ist, der einen Drehzapfen (24) umfasst, welcher sich um eine zweite Drehachse (C) drehen kann, die senkrecht zu der Basis (22) ist, und der mindestens zwei einander gegenüberliegende Arme (25) trägt, wobei sich während der Drehung der Arme (25) um die zweite Achse (C) entsprechende Bahnen des Films von mindestens zwei Rollen (26) abwickeln, die von den Armen (25) getragen werden, um den Ballen einzuwickeln, während er auf den Rollen rollt.

## Revendications

1. Machine agricole pour traiter des produits agricoles préalablement coupés tels que de l'herbe, du blé, du maïs, du foin, du fourrage et similaires, qui sont répartis de manière aléatoire sur une surface telle qu'un champ, un lopin de terre agricole et similaires, comprenant :
un appareil (2) pour transférer les produits agricoles préalablement coupés pour leur accumulation soignée, pendant l'avancement dudit appareil de transfert (2), dans une région prédéfinie qui est sensiblement positionnée le long d'une direction d'avancement (A) ;
une unité (3) pour mettre les produits agricoles en balle, qui est agencée sensiblement en aval dudit appareil de transfert (2) et est prévue avec au moins une unité de récolte de produits agricoles (4), qui fait face et est à proximité de ladite région prédéfinie, pour la formation consécutive d'une balle avec les produits agricoles préalablement coupés accumulés dans ladite région ;
un dispositif (5) pour envelopper la balle avec un film, qui fait face à et est à proximité de ladite unité de mise en balle (3), pour l'enveloppement sensiblement hermétique de la balle, avec l'isolation consécutive par rapport à l'extérieur,
dans laquelle ledit appareil de transfert (2) comprend des moyens (6) pour lever et distribuer les produits agricoles préalablement coupés à deux courroies transporteuses (7), qui sont agencées sur des côtés opposés par rapport à ladite direction d'avancement (A) et dans au moins une configuration de fonctionnement, sensiblement horizontalement et en angle droit par rapport à la direction d'avancement (A),
chacune desdites courroies (7) menant à ladite région prédéfinie positionnée le long de la direction d'avancement (A), pour le transfert et l'accumulation des produits agricoles préalablement coupés dans ladite région,
la machine agricole étant **caractérisée en ce que** ledit appareil de transfert (2) comprend une paire de moteurs (17) mutuellement indépendants pour lesdites courroies (7), qui sont sélectionnés de préférence pour être du type des moteurs hydrauliques associés aux circuits hydrauliques respectifs, chacun desdits moteurs (17) étant commandé par une unité de commande et de gestion dotée de capteurs pour détecter pas à pas la forme prise par la balle qui est formée, pour l'ajustement indépendant de la vitesse de transfert de chacune desdites courroies (7) suite à toutes les divergences par rapport à la forme prédéfinie de la balle et au besoin consécutif pour compenser les répartitions irrégulières des produits agricoles préalablement coupés sur le sol.

2. Machine agricole selon la revendication 1, **caractérisée en ce que** lesdits moyens de levage et de distribution (6) comprennent au moins une rangée de dents mutuellement alignées, qui tourne, au moins dans ladite configuration de fonctionnement, autour d'un premier axe de rotation (B) qui est parallèle à ladite courroie (7), afin de récolter les produits agricoles préalablement coupés sur le sol, les lever et les distribuer sur ladite au moins une courroie (7), qui est agencée afin de faire face à et être à proximité de ladite rangée de dents.

3. Machine agricole selon la revendication 2, **caractérisée en ce qu'**elle comprend un tracteur, doté d'une unité de puissance, et d'un châssis de remorque (9), qui peut être remorqué par ledit tracteur et supporte ledit appareil de transfert (2), ladite unité de mise en balle (3) et ledit dispositif d'emballage (5), où entre une prise de force (10) raccordée à ladite unité de puissance dudit tracteur et ledit appareil de transfert (2), des éléments (11) sont intercalés pour la transmission mécanique de la puissance fournie par ladite unité de puissance à ladite au moins rangée desdites dents, pour leur rotation autour dudit premier axe (B).

4. Machine agricole selon la revendication 3, **caractérisée en ce que** lesdits éléments de transmission mécanique (11) comprennent une pluralité d'arbres de transmission intermédiaires (12), qui sont intercalés entre ladite prise de force (10) et au moins une tige de support pour ladite au moins une rangée desdits dents, pour la transmission mécanique de la puissance fournie par ladite unité de puissance auxdits moyens de levage et de distribution (6), lesdits arbres intermédiaires (12) étant mutuellement raccordés par des joints (13) respectifs et/ou des chaînes de traction (14) qui sont enroulés autour de poulies (15) respectives qui sont supportées par lesdits arbres intermédiaires (12) et/ou des roues coniques (16).

5. Machine agricole selon les revendications 1, 2 et 3, **caractérisée en ce que** chacune desdites courroies (7) fait face à et est à proximité d'une pluralité desdites rangées desdites dents, qui tournent autour d'un même premier axe de rotation (B) respectif, qui est parallèle à ladite courroie (7) correspondante, chacune desdites rangées desdites dents étant supportée par une tige respective, qui est associée à ladite unité de puissance par lesdits éléments de transmission mécanique (11).

6. Machine agricole selon l'une quelconque des revendications 4 à 5, **caractérisée en ce qu'**elle comprend des moyens (18) pour déplacer chacune desdites courroies (7) et desdites tiges de support d'une manière mutuellement indépendante, pour tourner à partir de ladite configuration de fonctionnement, dans laquelle elles sont agencées horizontalement, jusqu'à une configuration inactive dans laquelle elles sont agencées sensiblement verticalement et à proximité de la direction d'avancement (A) afin de contenir l'occupation de l'espace transversal et vice versa.

7. Machine agricole selon la revendication 6, **caractérisée en ce que** lesdits moyens de mouvement (18) comprennent au moins une paire de vérins hydrauliques (19), chacun desdits vérins (19) étant articulé, au niveau de sa première extrémité (19a), par rapport audit châssis (9) et étant couplé, avec sa seconde extrémité coulissante (19b), à une courroie (7) respective.

8. Machine agricole selon une ou plusieurs des revendications précédentes, **caractérisée en ce que** ladite unité de mise en balle (3) comprend une chambre de formation de balle (21) qui est prévue avec une entrée pour introduire les produits agricoles préalablement coupés, qui est dirigée vers ladite unité de récolte (4) et ledit appareil de transfert (2), et avec une sortie (21a) pour décharger la balle, qui est fermée par une porte respective et fait face audit dispositif d'emballage (5), où après l'achèvement du processus de formation de balle, ladite porte peut être actionnée automatiquement afin de permettre son expulsion automatique et sa distribution audit dispositif d'emballage (5) où entre ladite unité de récolte (4) prévue pour lever les produits agricoles accumulés le long de ladite région prédéfinie, et ladite chambre (21), on intercale les éléments suivants : au moins un dispositif d'alimentation à vis pour transporter les produits agricoles vers ladite entrée, et une pluralité de lames pour déchiqueter les produits agricoles préalablement coupés.

9. Machine agricole selon une ou plusieurs des revendications précédentes, **caractérisée en ce que** ledit dispositif d'emballage (5) comprend une base d'appui (22) qui est définie par ledit châssis (9) et est prévue avec des rouleaux respectifs, ladite base (22) étant surmontée par un châssis (23), comprenant un pivot (24) qui peut tourneur autour d'un second axe de rotation (C), qui est perpendiculaire à ladite base (22), et supporte au moins deux bras (25) mutuellement opposés, pendant la rotation desdits bras (25) autour dudit second axe (C), des rabats respectifs dudit film se déroulant à partir d'au moins deux rouleaux (26) supportés par lesdits bras (25), pour emballer la balle, au fur et à mesure qu'elle roule sur lesdits rouleaux.
